# EUROPEAN PATENT APPLICATION

(11) **EP 1 728 818 A1**
(43) Date of publication of application: **06.12.2006**
(21) Application number: 06011347.9
(22) Date of filing: 01.06.2006
(51) Int. Cl.: C08K 5/103

(54) **Plasticizer for biodegradable resin**

(30) Priority: 02.06.2005 JP 2005162189
(71) Applicant: KAO CORPORATION, Chuo-ku, Tokyo (JP)
(72) Inventor: Hamaguchi, Takeshi c/o Kao Corporation, Wakayama-shi Wakayama (JP); Mori, Atsuhito c/o Kao Corporation, Wakayama-shi Wakayama (JP)
(74) Representative: HOFFMANN EITLE

(57) **Abstract**

The present invention relates to a plasticizer for biodegradable resin, which contains a compound represented by the following formula (1): 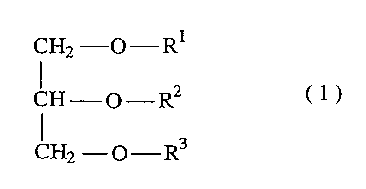 wherein at least one of R¹, R² and R³ is an acyl group derived from a carboxylic acid selected from an aliphatic hydroxycarboxylic acid and an acetylated aliphatic hydroxycarboxylic acid, and the remainder(s) is an acetyl group, a biodegradable resin composition containing biodegradable resin and the plasticizer.

## Description

### Technical Field

The present invention relates to a plasticizer for biodegradable resin and a biodegradable resin composition.

### Background Art

General-purpose resins made from petroleum, such as polyethylene, polypropylene, polyvinyl chloride and polystyrene are light-weight, have properties such as excellent processability, physical properties and durability, and are thus used in various fields such as miscellaneous goods for daily use, home appliances, automobile parts, building materials or food packaging. However, the excellent durability of these resin products becomes problematic at the time of disposal after use to make these products poor in degradability in the natural world, which may exert an influence on an ecological system.

To solve this problem, biodegradable resins, for example polylactic acid, copolymers of lactic acid and another aliphatic hydroxycarboxylic acid, aliphatic polyesters derived from aliphatic polyvalent alcohol and aliphatic polyvalent carboxylic acid, and copolymers containing units thereof have been developed as polymers that are biodegradable thermoplastic resins.

These biodegradable resins, when placed in soil, seawater or an animal body, initiate degradation in several weeks by the action of enzymes produced by naturally occurring microorganisms, to disappear in a period of about 1 year to severalyears. Their degradation products become lactic acid, carbon dioxide, water etc. which are harmless to the human body. At present, application of polylactic acid resin, among the aliphatic polyesters, is expected to be promising, having the following characteristics. L-lactic acid is inexpensively produced in a large amount by fermentation from saccharides obtained from corn, potato etc. Carbon dioxide is generated in a very low total amount because it is produced from natural agricultural produce. The obtained polymer has a high rigidity and a good transparency. For this reason, the polylactic acid resin is used in the field of agricultural and civil engineering materials such as flat yarn, net, horticultural materials, seedling pots etc. and in a window envelope, a shopping bag, a compost bag, writing materials, miscellaneous goods etc. However, the polylactic acid resin is brittle and rigid and lacks in flexibility, and because of these properties, is limited in use to the field of rigid molded products, is poor in flexibility upon molding into a film etc. , is problematic such as whitening upon folding, and is thus not used at present in the field of soft or semi-hard products. As techniques of application to the field of soft and semi-hard products, various methods that involve adding plasticizers have been proposed. For example, techniques that involve adding plasticizers such as glycerin diacetyl monofatty acid esters (JP-A 2000-302956) are disclosed.

### Disclosure of the invention

The present invention provides a plasticizer for biodegradable resin, which contains a compound represented by the following formula (1) (referred to hereinafter as compound (1)), a biodegradable resin composition containing biodegradable resin and the plasticizer. 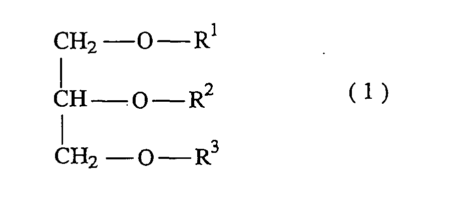 wherein at least one of R¹, R² and R³ is an acyl group derived from a carboxylic acid selected from an aliphatic hydroxycarboxylic acid and an acetylated aliphatic hydroxycarboxylic acid, and the remainder(s) is an acetyl group.

Further, the present invention provides use of the above compound as a plasticizer for biodegradable resin.

### Detailed description of the invention

In the prior art, volatilization during processing and its accompanying change in shape such as warp occurs, and performance such as transparency, bleed resistance etc. are not satisfactory.

The present invention provides a plasticizer for biodegradable resin, providing the resin with flexibility without inhibiting the transparency thereof, a biodegradable resin composition being excellent in volatilization resistance, transparency, flexibility, and bleed resistance.

The plasticizer of the present invention provide the resin with flexibility without inhibiting the transparency thereof, and the biodegradable resin composition of the present invention is excellent in volatilization resistance, flexibility, transparency, and bleed resistance.

### [Plasticizer]

In the compound (1), at least one of R¹, R² and R³ is an acyl group derived from a carboxylic acid selected from an aliphatic hydroxycarboxylic acid and an acetylated aliphatic hydroxycarboxylic acid, and the remainder(s) is an acetyl group. The acyl group derived from an acetylated aliphatic hydroxycarboxylic acid means an acyl group wherein a hydroxyl group of an acyl group derived from an aliphatic hydroxycarboxylic acid has been acetylated.

The number of carbon atoms in the aliphatic hydroxycarboxylic acid is preferably 4 or more, more preferably 8 or more, from the viewpoint of improving heat resistance, exhibiting sufficient volatilization resistance at processing temperature, and obtaining a uniform resin composition. From the viewpoint of bleed resistance and improvement of compatibility with resin, the number carbon atoms therein is preferably 22 or less, more preferably 20 or less. The aliphatic hydroxycarboxylic acid may be linear or branched and may be a saturated aliphatic hydroxycarboxylic acid or an unsaturated aliphatic hydroxycarboxylic acid. The number of carbon atoms in the aliphatic hydroxycarboxylic acid can be determined by gas chromatography using an internal standard.

The compound (1) is a compound wherein preferably at least one of R¹ and R³ is an acyl group derived from a carboxylic acid selected from an aliphatic hydroxycarboxylic acid and an acetylated aliphatic hydroxycarboxylic acid and R² is an acetyl group, and more preferably at least one of R¹ and R³ is an acyl group derived from a carboxylic acid selected from an aliphatic hydroxycarboxylic acid and an acetylated aliphatic hydroxycarboxylic acid and the remaining R¹ or R³, and R², are each an acetyl group.

50% or more, further 60% or more and particularly 80% or more of all acyl groups each derived from an carboxylic acid selected from an aliphatic hydroxycarboxylic acid and an acetylated aliphatic hydroxycarboxylic acid constituting R¹, R² and R³ are preferably acyl groups each derived from an acetylated aliphatic hydroxycarboxylic acid. The ratio of acyl groups derived from the acetylated aliphatic hydroxycarboxylic acid can be determined by ¹H-NMR measurement.

The method of producing the compound (1) is not particularly limited. For example, the compound (1) can be obtained by dehydration condensation reaction of glycerin with an aliphatic hydroxycarboxylic acid in an amount equivalent to the glycerin, in the presence of an esterification catalyst, followed by adsorbing and removing the catalyst or neutralizing and inactivating the catalyst if necessary, then fractionating only the objective starting material monoglyceride by distillation, reacting acetic acid or acetic anhydride with the starting material monoglyceride to acetylate its unreacted hydroxyl group, subsequent steam distillation of the resulting acetylated reaction product and purification thereof by removing the unreacted acetic acid or acetic anhydride, whereby the compound (1) can be obtained.

The aliphatic hydroxycarboxylic acid used herein includes hydroxyvaleric acid, hydroxycaproic acid, hydroxyenanthic acid, hydroxycaprylic acid, hydroxypelargonic acid, hydroxycapric acid, hydroxyundecanoic acid, hydroxylauric acid, hydroxytridecanoic acid, hydroxymyristic acid, hydroxypentadecanoic acid, hydroxypalmitic acid, hydroxymargaric acid, hydroxystearic acid, hydroxynonadecanoic acid, hydroxyarachic acid, hydroxybehenic acid, propenylglycolic acid, parasorbic acid, β-hydroxyhydrosorbic acid, ambrettolic acid, isoambrettolic acid, ricinoleic acid, ricinoelaidic acid and partial hydrogenated products thereof. These hydroxycarboxylic acids occur as various isomers depending on the position to which the hydroxyl group was added. For example, hydroxystearic acid occurs as 2-hydroxystearic acid, 3-hydroxystearic acid, 4-hydroxystearic acid, 5-hydroxystearic acid, 6-hydroxystearic acid, 7-hydroxystearic acid, 8-hydroxystearic acid, 9-hydroxystearic acid and 10-hydroxystearic acid, and regardless of the position at which the hydroxyl group is present, the obtained effect is the same.

More examples of the aliphatic hydroxycarboxylic acid include a hydroxycarboxylic acid having two hydroxyl groups, such as dihydroxycaproic acid, dihydroxyenanthic acid, dihydroxycaprylic acid, dihydroxypelargonic acid, dihydroxycapric acid, dihydroxyundecanoic acid, dihydroxylauric acid, dihydroxytridecanoic acid, dihydroxymyristic acid, dihydroxypentadecanoic acid, dihydroxypalmitic acid, dihydroxymargaric acid and dihydroxystearic acid, and a hydroxycarboxylic acid having three or more hydroxyl groups, such as tetrahydroxystearic acid. These hydroxycarboxylic acids also occur as various isomers depending on the position to which the hydroxyl groups are added, and the effect of these hydroxycarboxylic acids similar to monohydroxycarboxylic acids is the same regardless of the position at which the hydroxyl groups are present.

Preferable among these aliphatic hydroxycarboxylic acids are hydroxycaprylic acid, hydroxycapric acid, hydroxylauric acid, hydroxymyristic acid, hydroxypalmitic acid, hydroxystearic acid and ricinoleic acid.

Acetic acid or acetic anhydride and monoglyceride are reacted preferably in an amount of 1 to 1.5 equivalents of acetic acid or acetic anhydride relative to 1 equivalent of hydroxyl group of the monoglyceride.

In an alternative method of obtaining the compound (1), there is also a method which includes mixing glycerin with triglyceride having an aliphatic hydroxycarboxylic acid residue, subjecting the mixture to ester exchange reaction in the presence of an esterification catalyst, subjecting the resulting product to distillation fractionation to give monoglycerides and acetylating the product in the same manner as described above.

As a further alternative method, there is also a method which includes subjecting triglyceride having an aliphatic hydroxycarboxylic acid residue as a starting material to enzyme reaction to give monoglyceride and then acetylating this product in the same manner as above.

The triglyceride having an aliphatic hydroxycarboxylic acid residue used herein includes castor oil, hardened castor oil etc.

In the present invention, a commercial product can also be used as the compound (1). The commercial product includes GRINDSTED SOFT-N-SAFE (hardened castor oil acetylated monoglyceride, manufactured by DANISCO) etc. The compound (1) can be used alone or as a mixture.

The plasticizer of the present invention can contain not only the compound (1) but also unreacted materials in production of the compound (1) and one or more plasticizers other than the compound (1).

The plasticizers other than the compound (1) include acetylated monoglyceride, acetylated polyglycerin etc. Specific examples include glycerin diacetomonopropionate (number of carbon atoms: 3), glycerin diacetomonocaprylate (number of carbon atoms: 8), glycerin diacetomonocaprate (number of carbon atoms: 10), glycerin diacetomonolaurate (number of carbon atoms: 12), glycerin diacetomonostearate (number of carbon atoms: 18), glycerin triacetate, diglycerin tetraacetate, triglycerin pentaacetate, polyglycerin acetylated hydroxycarboxylate (compound obtained by reacting 0.8 to 2.5 moles of hydroxycarboxylic acid (number of carbon atoms: 8 to 20) with 1 mole of a condensate of 2 to 10 glycerin molecules and then acetylating remaining hydroxyl groups) etc.

The content of the compound (1) in the plasticizer of the present invention is preferably 20 wt% or more, more preferably 50 wt% or more, stillmore preferably 70 wt% or more.

### [Biodegradable resin]

The biodegradable resin used in the present invention is preferably polyester resin having biodegradability based on JIS K6953 (ISO14855) "Test of Aerobic and Ultimate Biodegradation Degree and Disintegration Degree of Regulated Aerobic Compost Conditions."

The biodegradable resin used in the present invention is not particularly limited insofar as the resin has biodegradability by which it is degraded into a low-molecular compound by microorganisms in the natural world. Examples of the biodegradable resin include aliphatic polyesters such as polyhydroxybutyrate,polyhydroxyvalerate/polyhydroxyhexanoa te copolymers, polycaprolactone, polybutylene succinate, polybutylene succinate/adipate, polyethylene succinate, polylactic acid resin, polymalate, polyglycolate, polydioxanone, poly(2-oxetanone) etc.; aliphatic/aromatic copolyesters such as polybutylene succinate/terephthalate, polybutylene adipate/terephthalate, polytetramethylene adipate/terephthalate etc.; and mixtures of the above aliphatic polyesters or aliphatic/aromatic copolyesters and naturally occurring polymers such as starch, cellulose, chitin, chitosan, gluten, gelatin, casein, soybean protein, collagen, keratin etc.

Among these, the aliphatic polyesters are preferable for processability, economical viewpoint and availability in a large amount, and polylactic acid resin is more preferable from the viewpoint of physical properties. The polylactic acid resin is polylactic acid or a copolymer of lactic acid and a hydroxycarboxylic acid. The hydroxycarboxylic acid includes glycolic acid, hydroxybutyric acid, hydroxyvaleric acid, hydroxypentanoic acid, hydroxycaproic acid and hydroxyheptanoic acid, among which glycolic acid and hydroxycaproic acid are preferable. The polylactic acid preferably has a molecular structure consisting of 20 to 100 mol% L- or D-lactic acid and 0 to 80 mol% lactic acid unit of the corresponding enantiomer. A lactic acid/hydroxycarboxylic acid copolymer consists of 85 to 100 mol% L- or D-lactic acid unit and 0 to 15 mol% hydroxycarboxylic acid unit. Such polylactic acid resin can be obtained by selecting starting materials of necessary structure from L-lactic acid, D-lactic acid and hydroxycarboxylic acids and subsequent dehydration polycondensation thereof. Preferably the polylactic acid resin can be obtained by selecting starting materials of necessary structure from cyclic lactic acid dimers such as lactide and cyclic glycolic acid dimers such as glycollide and caprolactone and ring-opening polymerization thereof. The lactide includes L-lactide that is a cyclic dimer of L-lactic acid, D-lactide that is a cyclic dimmer of D-lactic acid, meso-lactide that is a cyclic dimer of D- and L-lactic acid, and DL-lactide that is a racemic mixture of D- and L-lactide. In the present invention, any lactides can be used. However, the major starting material is preferably D- or L-lactide.

From the viewpoint of heat resistance, the polylactic acid resin is preferably polylactic acid resin consisting of crystalline polylactic acid having an optical purity of 90% or more and polylactic acid having an optical purity of less than 90% wherein the ratio of the crystalline polylactic acid having an optical purity of 90% or more to the polylactic acid having an optical purity of less than 90% is from 100/0 to 10/90, preferably from 100/0 to 25/75.

Commercially available biodegradable resins include, for example, Biomax manufactured by DuPont, Ecoflex manufactured by BASF, Easter Bio manufactured by Eastman Chemicals, Bionole manufactured by Showa Highpolymer Co. , Ltd., Mataabee manufactured by The Nippon Synthetic Chemical Industry, Co., Ltd., LACEA manufactured by Mitsui Chemicals, Inc., Lunare manufactured by Nippon Shokubai Co., Ltd. , Novon manufactured by Chisso Corporation, and Nature Works (registered trade name) PLA manufactured by Nature Works LLC.

Preferable among these biodegradable resins are polylactic acid resin (for example, LACEA H-100, H-280, H-400, H-440 manufactured by Mitsui Chemicals, Inc., Nature Works (registered trade name) PLA manufactured by Nature Works LLC, aliphatic polyesters such as polybutylene succinate (for example, Bionole manufactured by Showa Highpolymer Co. , Ltd.), and aliphatic or aromatic copolyesters (trade name: Biomax, manufactured by DuPont) such as poly(butylene succinate/terephthalate) etc.

From the viewpoint of heat resistance, crystalline biodegradable resin having a high purity of L-lactic acid is preferable. It is more preferable to orient and crystallize it by stretching. The crystalline biodegradable resin includes LACEA H-100, H-400, H-440 etc. manufactured by Mitsui Chemicals, Inc.

### [Biodegradable resin composition]

The biodegradable resin composition of the present invention contains the plasticizer of the present invention and biodegradable resin. The content of the plasticizer of the present invention in 100 parts of biodegradable resin is preferably 1 to 70 parts by weight, more preferably 3 to 50 parts by weight, still more preferably 5 to 30 parts by weight, for volatilization resistance, transparency, flexibility and bleed resistance and from an economical viewpoint.

The content of the biodegradable resin in the biodegradable resin composition of the present invention is preferably 50 wt% or more, more preferably 70 wt% or more.

The composition of the present invention can contain other components such as a lubricant, a crystal nucleus agent etc. in addition to the above-described plasticizer. The lubricant includes, for example, hydrocarbon-based wax such as polyethylene wax, fatty acids such as stearic acid, fatty esters such as glycerol ester, metallic soaps such as calcium stearate, ester wax such as montanic acid wax, an anionic surfactant having an aromatic ring, such as alkyl benzene sulfonate, and an anionic surfactant having an alkylene oxide addition moiety, such as polyoxyethylene alkyl ether sulfate. The crystal nucleus agent can be exemplified by natural or synthetic silicate compounds, titanium oxide, barium sulfate, tricalcium phosphate, calciumcarbonate, sodium phosphate etc. The silicate compounds can be exemplified by kaolinite, halloysite, talc, smectite, vermiculite and mica. The content of each of the lubricant and crystal nucleus agent is preferably 0.05 to 5 parts by weight, more preferably 0.1 to 2 parts by weight, relative to 100 parts by weight of the biodegradable resin.

The composition of the present invention can contain, as components other than those described above, an antistatic agent, an anti-fogging agent, alight stabilizer, a UV absorber, a pigment, an inorganic filler, an anti-fungus agent, an antibacterial agent, a foaming agent, a flame-retardant, and a plasticizer other than the plasticizer of the present invention in such a range that the effect of the invention is not hindered.

By virtue of excellent processability, the composition of the present invention can be processed for example at low temperatures of 160 to 190°C, and can thus be subjected to calendering, and the plasticizer is hardly degraded. The composition of the present invention can be formed into a film or sheet usable in various applications.

### Examples

The following examples describe practice of the present invention. The Examples describe mere illustration of the present invention and are not intended to limit the present invention.

The following compounds were used as the plasticizers in the Examples and Comparative Examples below.
Plasticizer 1: Hardened castor oil acetylated monoglyceride, that is, GRINDSTED SOFT-N-SAFE (manufactured by DANISCO). As a result of analysis by gas chromatography and ¹H-NMR, plasticizer 1 was composed of 85 wt% hardened castor oil acetylated monoglyceride and 10 wt% glycerin diacetomonostearate.
Plasticizer 2: Glycerin diacetomonocaproate produced by the following method:
109 g Sunsoft 700H (Taiyo Kagaku Co. , Ltd.) was charged into a 1-L flask, and 153 g acetic anhydride was added dropwise thereto under stirring with a stirrer and reacted for 1 hour at a reaction temperature of 80 to 130 °C and aged for 3 hours at 120°C. After the reaction was finished, the unreacted acetic anhydride and a formed byproduct acetic acid were distilled away at 100°C/2.5 kPa, and the remaining reaction mixture was subjected to steam distillation at 100°C/1.3 kPa to give objective plasticizer 2.
Plasticizer 3: Diacetyl monofatty acid (C12 to C18) glyceride, that is, GRINDSTED ACETEM95CO (manufactured by DANISCO)

### Examples 1 to 2 and Comparative Examples 1 to 3

A composition consisting of 100 parts by weight of polylactic acid resin (LACEA H-400 manufactured by Mitsui Chemicals, Inc.) previously dried under vacuum at 50°C for 24 hours and 15 parts by weight of a plasticizer shown in Table 1 was kneaded as biodegradable resin for 10 minutes in a Laboplasto mill (manufactured by Toyo Seiki Seisaku-Sho, Ltd.) at 180°C to prepare a test piece of 0.5 mm in thickness with a press molding machine at 190°C.

The resulting test piece was evaluated for volatilization resistance, flexibility, transparency, and bleed resistance in the following method. The results are shown in Table 1.

### <Method of evaluating volatilization resistance>

Using a differential thermogravimeter, the plasticizer was heated from room temperature to 300°C (5°C/min) in a nitrogen atmosphere and measured for the temperature at which its weight was reduced by 10%. Because the processing temperature of the polylactic acid resin is 200 to 220°C, the volatilization resistance of the plasticizer is required at 220°C or more, and as the temperature determined above is increased, the plasticizer is more excellent in volatilization resistance.

### <Method of evaluating the presence or absence of warp>

The presence or absence of warp in the test piece after storage for 3 hours in a thermostatic chamber at 70°C was observed with the naked eye.

### <Method of evaluating flexibility>

The test piece was punched out with Dumbbell No. 3, left in a thermostatic chamber at a temperature of 23°C under 50% relative humidity (RH) for 24 hours, and subjected to tensile testing at a stress rate of 200 mm/min. and the flexibility was expressed as Young's modulus.

### <Method of evaluating transparency>

Using an integrating-sphere light-transmission measuring instrument (haze meter) prescribed in JIS-K7105, the haze value of the test piece was measured. A small value is indicative of excellent transparency.

### <Bleed resistance (presence or absence of bleed)>

The test piece (length 100 mm×width 100 mm×thickness 0.5 mm) was left in a thermostatic chamber at 70°C for 3 hours, and the presence or absence of plasticizer bleeding on the surface thereof was observed with the naked eye.

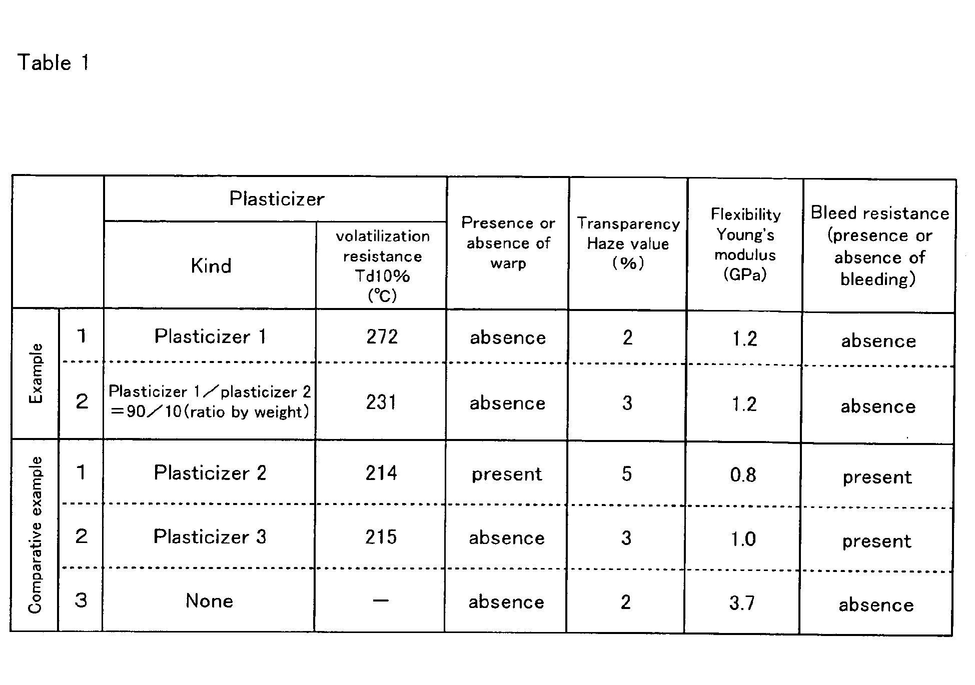

## Claims

1. A plasticizer for biodegradable resin, which comprises a compound represented by the following formula (1) : 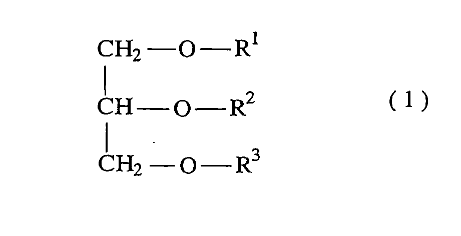 wherein at least one of R¹, R² and R³ is an acyl group derived from a carboxylic acid selected from an aliphatic hydroxycarboxylic acid and an acetylated aliphatic hydroxycarboxylic acid, and the remainder(s) is an acetyl group.

2. The plasticizer for biodegradable resin according to claim 1, wherein the number of carbon atoms in the aliphatic hydroxycarboxylic acid is 4 to 22.

3. A biodegradable resin composition comprising a biodegradable resin and the plasticizer of claim 1 or 2.

4. The biodegradable resin composition according to claim 3, wherein the biodegradable resin is polylactic acid resin.

5. Use of the compound of claim 1 or 2 as a plasticizer for biodegradable resin.
